# EUROPÄISCHE PATENTSCHRIFT

(11) **EP 1 877 615 B1**
(45) Veröffentlichungstag und Bekanntmachung des Hinweises auf die Patenterteilung: **11.11.2009**
(21) Anmeldenummer: 06708258.6
(22) Anmeldetag: 14.02.2006
(51) Int. Cl.: D06F 58/28

(54) **ELEKTRISCHER SCHALTKREIS FÜR WÄSCHETROCKNER**
ELECTRIC SWITCHING CIRCUIT FOR A CLOTHES DRYER
CIRCUIT ELECTRIQUE POUR SECHE-LINGE

(30) Priorität: 29.04.2005 DE 102005020095
(43) Veröffentlichungstag der Anmeldung: 16.01.2008
(73) Patentinhaber: BSH Bosch und Siemens Hausgeräte GmbH, 81739 München (DE)
(72) Erfinder: PETERS, Bert, 14656 Brieselang (DE); NAWROT, Thomas, 14167 Berlin (DE); SATTLER, Guido, 14612 Falkensee (DE)
(86) Internationale Anmeldenummer: PCT/EP2006/050921
(87) Internationale Veröffentlichungsnummer: WO 2006/117254

(56) Entgegenhaltungen:
- EP-A- 0 371 263
- DE-A1- 2 512 622
- US-A- 4 763 425

## Beschreibung

Die Erfindung betrifft einen elektrischen Schaltkreis umfassend:
eine Mehrzahl von Strompfaden mit einem ersten Strompfad mit einem Elektromotor und einem zweiten Strompfad mit einer ersten Heizung und einem in Reihe zu der ersten Heizung geschalteten Schalter (zum Öffnen oder Schließen des zweiten Strompfades im Ansprechen auf einen jeweils aktuellen Betriebszustand des Elektromotors, insbesondere zur Steuerung einer Heizung vorzugsweise für einen Luftstrom in einem Wäschetrockner.

Ein Schaltkreis solcher Gattung geht hervor aus der DE 25 12 622 A1. Dieser bekannte Schaltkreis ist bestimmt zur Anwendung in einem Händetrockner oder einem gegebenenfalls auch zum Trocknen von Wäsche eingerichteten Waschvollautomaten.

Aus der EP 0 371 263 A1 geht ein Schaltkreis in einer zum Waschen und Trocknen bestimmten Wäschebehandlungsmaschine hervor. In diesem Schaltkreis sind ein Regelthermostaten und zwei Schutzthermostaten in Serie mit einem Heizelement geschaltet. Dabei ist ein erster der Schutzthermostaten in Reihe geschaltet zu zumindest einem elektrischen Widerstand, welcher in wärmeleitender Verbindung zu einem Thermostatkolben eines zweiten der Schutzthermostaten steht.

Wäschetrockenmaschinen, auch Wäschetrockner genannt, verfügen über einen Lüfter zum Erzeugen eines Luftstromes und vorzugsweise auch über eine Heizung zum Erhitzen des Luftstromes zum Trocknen von Wäsche. Der Lüfter wird typischerweise von einem Elektromotor angetrieben. Bei besonderen Betriebszuständen des Wäschetrockners, z.B. bei schwerer nasser Wäsche, bei einer generell hohen Beladung, und/oder bei hohen Umgebungstemperaturen besteht die Gefahr einer Überhitzung des Elektromotors. In diesem Fall wird der Elektromotor typischerweise durch eine vorhandene Schutzschaltung automatisch abgeschaltet. Das Abschalten des Elektromotors hat jedoch zur Folge, dass der vom Elektromotor angetriebene Lüfter dann stillsteht und ein Luftstrom durch den Wäschetrockner nicht mehr stattfindet. Um in diesem Fall eine Überhitzung der Luftstrom-Heizung und daraus resultierende Schäden an der Heizung selber, an einem Heizkanal, an dem Rad des Lüfters oder an einer anderen Baugruppe zu verhindern, ist es im Stand der Technik üblich, in Reihe zur Heizung für den Luftstrom einen Schalter vorzusehen, um die Heizung im Ansprechen auf jeweilige Betriebszustände des Elektromotors abschalten zu können. So ist es insbesondere bekannt, die Heizung sofort abzuschalten, wenn ein Ausfall des den Lüfter antreibenden Elektromotors erkannt wird.

Traditionell ist dieser gesteuerte Schalter, zum Beispiel, in Form eines Relais oder eines Fliehkraftschalters realisiert. Das Relais ist typischerweise so geschaltet, dass es ein Ausbleiben eines Stromes durch den Elektromotor erkennt und daraufhin den Schalter in Reihe zu der Heizung öffnet. Der Fliehkraftschalter erkennt das Ausbleiben einer Drehung des Elektromotors und schaltet daraufhin den der Heizung zugeordneten Schalter offen.

Ein fliehkraftgesteuerter Schalter ist relativ teuer. Einfache Relais sind zwar relativ preisgünstig, genügen aber oftmals nicht vorgeschriebenen Sicherheitsstandards. Demgegenüber stellt die Verwendung von Relais, welche derartige Sicherheitsstandards erfüllen, das heißt welche zum Beispiel mit Materialien ausgeführt sind, welche die verschärften Anforderungen an Entflammbarkeit und Glühdrahtprüfung nach der Norm IEC 60335, 4 erfüllen, insbesondere bei serienmäßig produzierten Geräten, wie zum Beispiel Wäschetrocknern, einen nicht zu vernachlässigen Kostenfaktor dar.

Ausgehend von diesem Stand der Technik liegt der Erfindung die Aufgabe zugrunde, einen bekannten elektrischen Schaltkreis, einen Wäschetrockner mit diesem Schaltkreis und ein Verfahren zum Betreiben des Wäschetrockners derart weiterzubilden, dass ein Abschalten einer Heizung zum Erwärmen eines Luftstromes durch den Wäschetrockner preisgünstiger möglich ist.

Diese Aufgabe wird erfindungsgemäß gelöst durch den elektrischen Schaltkreis umfassend: eine Mehrzahl von Strompfaden mit einem ersten Strompfad mit einem Elektromotor und einem zweiten Strompfad mit einer ersten Heizung und einem in Reihe zu der ersten Heizung geschalteten Schalter zum Öffnen oder Schließen des zweiten Strompfades im Ansprechen auf einen jeweils aktuellen Betriebszustand des Elektromotors. Dabei ist der Schalter als Bimetallschalter ausgebildet, und eine dem Bimetallschalter zugeordnete zweite Heizung, welche sich in einem anderen Strompfad als die erste Heizung befindet, ist vorgesehen zum Detektieren des jeweils aktuellen Betriebszustandes des Elektromotors und zum Ansteuern des Bimetallschalters durch Verändern von dessen Umgebungstemperatur im Ansprechen auf den detektierten Betriebszustand.

Ein Bimetallschalter mit zugeordneter zweiter Heizung ist heute als vorzugsweise integriertes Bauteil preisgünstig am Markt verfügbar. Auf eine besonders teure Ausgestaltung dieses Bauteils kann verzichtet werden, wenn die Sicherheitskette Sensor - Software - Aktor in probater Weise durch entsprechende Ausbildung der Software gewährleistet ist. Vorteilhafterweise kann die dem Bimetallschalter zugeordnete Heizung bei geeigneter Schaltung bzw. Anordnung nicht nur zum Ansteuern des Bimetallschalters durch Verändern von dessen Umgebungstemperatur, sondern auch zum Detektieren des jeweils aktuellen Betriebszustandes des Elektromotors verwendet werden.

Vorteilhafterweise dient der Elektromotor zum Antreiben eines Lüfters, welcher seinerseits einen Luftstrom erzeugt. Bei Verwendung in einem Wäschetrockner dient der Luftstrom zum Trocknen von Wäsche. Der Luftstrom wird dann von einer ersten Heizung erwärmt.

Vorteilhafterweise kann die zweite Heizung zum Detektieren des jeweils aktuellen Betriebszustandes des Elektromotors, d.h. insbesondere zum Detektieren, ob der Elektromotor ein oder ausgeschaltet ist, verwendet werden, indem sie in dem ersten Strompfad in Reihe zu dem Elektromotor geschaltet ist. Insbesondere der Betrag des Stromes in dem ersten Strompfad repräsentiert dann jeweils den aktuellen Betriebszustand des Elektromotors.

Alternativ dazu kann die zweite Heizung den Betriebszustand des Elektromotors auch dadurch Detektieren, dass sie in dem von dem Lüfter generierten Luftstrom angeordnet ist. Bleibt dieser Luftstrom aus, was auf einen ausgeschalteten bzw. defekten Elektromotor schließen lässt, wird die zweite Heizung weniger gekühlt und es kann mehr Wärme in die Umgebung des Bimetallschalters abgegeben werden als in einem umgekehrten Fall, wenn der Elektromotor läuft und den Lüfter betreibt. Vorteilhafterweise wird mit dieser alternativen Anordnung der zweiten Heizung nicht nur der Elektromotor sondern auch der Lüfter und die Kühlwirkung des von dem Lüfter erzeugten Luftstromes mit überwacht.

Sofern der Elektromotor, die erste und/oder die zweite Heizung für einen Betrieb bei gleicher Versorgungsspannung ausgelegt sind, empfiehlt sich eine Parallelschaltung der jeweiligen Pfade in denen die genannten Bauelemente betrieben werden zwischen einem gemeinsamen Spannungspotential und Masse.

Der Schaltkreis ist insbesondere Schaltkreis in einem Wäschetrockner, welcher Wäschetrockner eine Wäschetrommel, welche einen Raum zum Trocknen von Wäsche ausbildet, und einen Lüfter zum Erzeugen eines Luftstromes durch die Trommel aufweist, wobei der Elektromotor zum Antreiben des Lüfters und die erste Heizung zum Aufheizen des Luftstromes durch die Trommel dient.

Die oben genannte Aufgabe wird erfindungsgemäß weiterhin gelöst durch ein Verfahren zum Betreiben eines Wäschetrockners mit einem Lüfter zum Erzeugen eines Luftstromes zum Trocknen von Wäsche, einem den Lüfter antreibenden Elektromotor (und einer ersten Heizung, umfassend die folgenden Schritte:
Erwärmen eines Luftstromes mit Hilfe der ersten Heizung;
Detektieren des jeweils aktuellen Betriebszustandes des Elektromotors; und
Ein- oder Ausschalten der ersten Heizung im Ansprechen auf den detektierten Betriebszustand; dabei erfolgt
das Detektieren des jeweils aktuellen Betriebszustandes mit Hilfe einer zweiten Heizung, welche sich in einem anderen Strompfad als die erste Heizung befindet; und
das Ein- oder Ausschalten mit Hilfe eines Bimetallschalters, indem die Umgebungstemperatur des Bimetallschalters mit Hilfe der zweiten Heizung im Ansprechen auf den detektierten aktuellen Betriebszustand eingestellt wird.

Die Vorteile dieser Lösungen entsprechen den oben mit Bezug auf den beanspruchten elektrischen Schaltkreis genannten Vorteilen.

Insgesamt bewirkt der beanspruchte elektrische Schaltkreis eine Verbesserung der Betriebssicherheit des Gerätes in dem er jeweils verwendet wird, insbesondere eines Wäschetrockners.

Der erfindungsgemäße elektrische Schaltkreis ist anhand von zwei in der Zeichnung dargestellten Ausführungsbeispielen näher erläutert. Darin zeigen
- Fig. 1: ein erstes Ausführungsbeispiel des erfindungsgemäßen elektrischen Schaltkreises;
- Fig. 2: ein zweites Ausführungsbeispiel des erfindungsgemäßen elektrischen Schaltkreises und
- Fig. 3: einen Wäschetrockner mit dem erfindungsgemäßen elektrischen Schaltkreis.

In beiden, in den genannten Figuren dargestellten Ausführungsbeispielen dient eine zweite Heizung zum Detektieren des jeweils aktuellen Betriebszustandes eines Elektromotors und zum Ansteuern eines Bimetallschalters durch Verändern von dessen Umgebungstemperatur im Ansprechen auf den detektierten Betriebszustand. Die beiden Ausführungsbeispiele des elektrischen Schaltkreises unterscheiden sich lediglich dadurch, dass die zweite Heizung in dem elektrischen Schaltkreis jeweils in unterschiedlicher Weise geschaltet bzw. angeordnet ist zum Detektieren des jeweils aktuellen Betriebszustandes. In allen Figuren, auch bei unterschiedlichen Ausführungsbeispielen, sind gleiche Bauelemente mit gleichen Bezugszeichen bezeichnet.

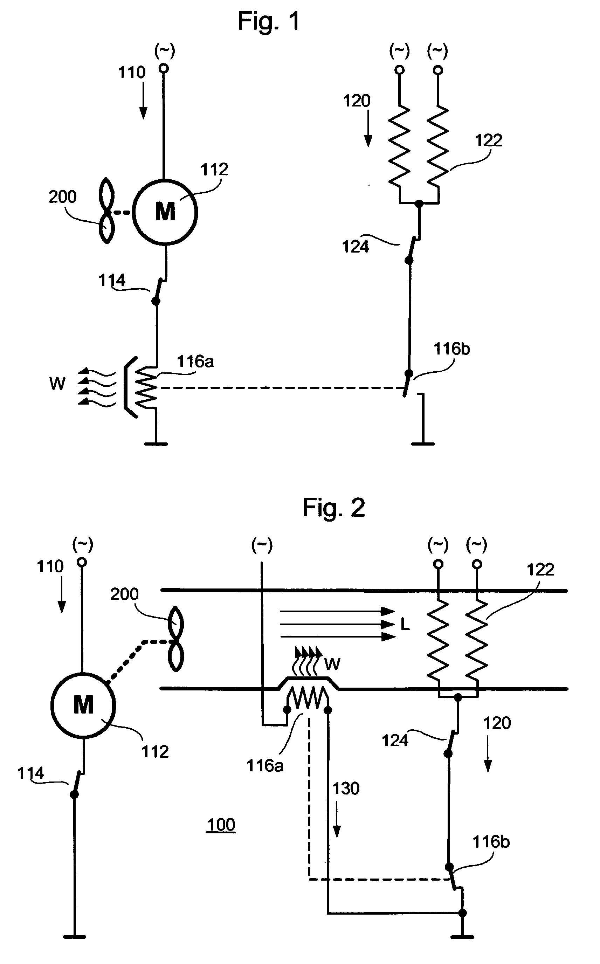

Figur 1 zeigt ein erstes Ausführungsbeispiel des erfindungsgemäßen Schaltkreises. Er umfasst zwei Strompfade 110 und 120. Bei dem ersten Ausführungsbeispiel umfasst der erste Strompfad 110 eine Reihenschaltung bestehend aus einem Elektromotor 112 und einer Schutzschaltung 114 zum Schutz des Elektromotors 112 gegen Überlast.

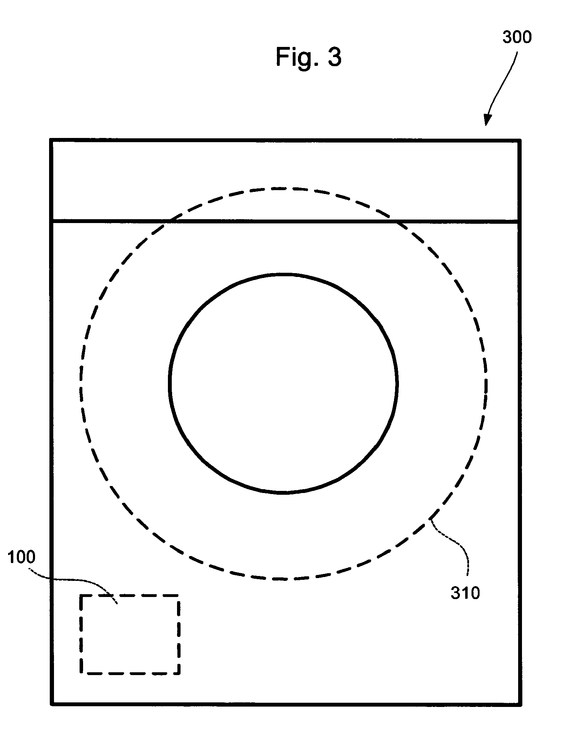

Der Motor 112 dient beispielsweise zum Antreiben eines Lüfters 200, welcher seinerseits zur Generierung eines Luftstromes, vorzugsweise in einem Wäschetrockner 300 (siehe Figur 3), dient.

Der zweite Strompfad 120 umfasst eine Reihenschaltung bestehend aus einer ersten Heizung 122 und einem Schutzschalter 124 zum Abkoppeln der zweiten Heizung 122 von einer Versorgungsspannung (-), das heißt zum Abschalten der Heizung bei Überhitzung. Die erste Heizung 122 dient bei Einbau des elektrischen Schaltkreises in den Wäschetrockner 300 zum Erwärmen des von dem Lüfter 200 generierten Luftstromes L. Der Luftstrom dient in dem Wäschetrockner 300 zum Trocknen von Wäsche.

Erfindungsgemäß umfasst der zweite Strompfad 120 neben dem Schutzschalter 124 noch einen weiteren Schutzschalter 116b, welcher ebenfalls als Bimetallschalter ausgebildet ist. Während der Schutzschalter 124 jeweils die aktuelle Temperatur der ersten Heizung 122 erfasst und zum Abschalten der ersten Heizung 122 von der Versorgungsspannung (+) bei drohender Überhitzung dient, dient der Schalter 116b zum An- oder Abschalten der ersten Heizung 122 von der Versorgungsspannung in Abhängigkeit des jeweils aktuellen Betriebszustandes des Elektromotors 112 in dem ersten Strompfad 110. Erfindungsgemäß erfolgt die Erfassung des aktuellen Betriebszustandes des Elektromotors mit Hilfe einer dem Bimetallschalter 116b zugeordneten zweiten Heizung 116a.

Bei dem in Figur 1 gezeigten ersten Ausführungsbeispiel ist die zweite Heizung 116a zu diesem Zweck zusätzlich zu dem Elektromotor 112 und dem Schutzschalter 114 in dem ersten Strompfad 110 in Reihe geschaltet. Damit wird erreicht, dass immer während des Betriebs des Elektromotors 112 die zweite Heizung 116a mit dem gleichen Strom wie der Elektromotor 112 bestromt wird. Die auf diese Weise von der zweiten Heizung 116a generierte Wärme wirkt unmittelbar auf den Bimetallschalter 116b mit der gewünschten Folge, dass dieser Schalter 116b den zweiten Strompfad 120 geschlossen und damit die erste Heizung 122 in Betrieb hält (Arbeits- oder NO-Kontakt).

Ist alternativ dazu der erste Strompfad 110, zum Beispiel, durch den Schutzschalter 114 unterbrochen, mit der Konsequenz, dass sich der Elektromotor 112 in einem Betriebszustand "Ausgeschaltet" befindet, so fließt auch kein Strom mehr durch die zweite Heizung 116a mit der Folge, dass der Bimetallschalter 116b abkühlt und den zweiten Strompfad 120 unterbricht. Wichtig ist dabei, dass die zweite Heizung 116a und der Bimetallschalter 116b konstruktiv genau aufeinander abgestimmt sind, so dass sich der Bimetallschalter 116b nur unter sehr genau definierten Bedingungen öffnet und schließt. Bei der Auslegung des Schalters und der zweiten Heizung ist insbesondere eine Strahlung eines Schaltergehäuses zu berücksichtigen.

In einigen Fällen des ersten Ausführungsbeispiels des erfindungsgemäßen elektrischen Schaltkreises kann eine diesem Beipiel anhaftende lange Reaktionszeit sowie eine nur indirekte Überwachung des zur Kühlung der Heizung notwendigen Luftstromes des Lüfters 200 stören.

Daher wird ein zweites Ausführungsbeispiel für den erfindungsgemäßen elektrischen Schaltkreis 100 in Figur 2 gezeigt, das diese Eigenschaften überwindet. Diese Überwindung erfolgt in der Weise, dass die zweite Heizung 116a nicht in den ersten Strompfad, sondern, unabhängig von dem ersten und zweiten Strompfad, über einen dritten Strompfad 130 betrieben und in dem von dem Lüfter 200 erzeugten Luftstrom angeordnet wird.

Der dritte Strompfad liegt in Reihe mit dem Hauptschalter eines Gerätes, zum Beispiel des Wäschetrockners 300, in welchem der elektrische Schaltkreis 100 betrieben wird. Auf diese Weise wird sichergestellt, dass die zweite Heizung 116a dauerhaft bestromt wird, solange das Gerät eingeschaltet ist. Aufgrund ihrer dauerhaft gleichartigen Bestromung erzeugt die zweite Heizung 116a grundsätzlich eine gleichbleibende Wärme W. Aufgrund der Anordnung der zweiten Heizung 116a gemäß dem zweiten Ausführungsbeispiel in dem Luftstrom wird jedoch in der Regel ein Teil der von der zweiten Heizung 116a erzeugten Wärme W von dem Luftstrom des Lüfters 200 abtransportiert und gelangt deshalb nicht in die Umgebung des Bimetallschalters 116b. Anders ausgedrückt: Das Öffnen und Schließen des Bimetallschalters 116b wird aufgrund von dessen thermischer Kopplung mit dem Luftstrom durch die Funktion des Lüfters 200 und des Motors 112 gesteuert. Genauer gesagt, wird die von der zweiten Heizung 116a erzeugte Wärme W bei ordnungsgemäß betriebenem Lüfter 200 und Motor 112 zumindest teilweise von dem Luftstrom aus der Umgebung des Bimetallschalters abgeführt, so dass dieser relativ kalt bleibt. Im Unterschied zu dem ersten Ausführungsbeispiel ist der Bimetallschalter 116b bei dem zweiten Ausführungsbeispiel vorzugsweise als Ruhe- oder NC-Kontakt geschaltet, so dass er bei relativ geringer Umgebungstemperatur den zweiten Strompfad schließt und auf diese Weise die erste Heizung 122 in Betrieb hält.

Wenn jedoch umgekehrt der Motor 112 oder der Lüfter 200 ausfällt mit der Folge, dass der dadurch abgeschwächte bzw. gänzlich ausbleibende Luftstrom die von der zweiten Heizung 112 erzeugte Wärme nicht mehr aus der Umgebung des Bimetallschalters 116b abführen kann, öffnet der Schalter 116b den zweiten Strompfad. Die erste Heizung 122 wird daraufhin abgeschaltet und vor einer drohenden Überhitzung aufgrund des abgeschwächten bzw. fehlenden Luftstromes bewahrt. Vorteilhafterweise erfolgt diese Abschaltung über den Schalter 116b bereits bevor der Überlastschalter 124 eine erhöhte Temperatur der ersten Heizung 122 erkannt hat. Vorteilhafterweise kann der Bimetallschalter 116b zusammen mit der ihm zugeordneten zweiten Heizung 116a unmittelbar auf kritische Zustände des Luftstromes, das heißt auf eine Verringerung, eine Unterbrechung oder eine Umkehr des Luftstroms aufgrund von Druckschwankungen reagieren. Der Bimetallschalter 116b muss so ausgelegt sein, dass er einerseits auch bei niedrigen Lufttemperaturen sicher auslöst, andererseits aber auch bei höchstmöglicher Prozesslufttemperatur nicht zerstört wird.

Wie in Figur 3 veranschaulicht, wird die erfindungsgemäße Schaltung 100 vorzugsweise in einem Wäschetrockner 300 mit einer Wäschetrommel 310 eingesetzt und dient dort zum Schutz der ersten Heizung 122 zum Aufwärmen des Luftstromes zum Trocknen der Wäsche gegenüber Überhitzung.

## Patentansprüche

1. Elektrischer Schaltkreis (100) umfassend:
eine Mehrzahl von Strompfaden (110, 120, 130) mit einem ersten Strompfad (110) mit einem Elektromotor (112) und einem zweiten Strompfad (120) mit einer ersten Heizung (122) und einem in Reihe zu der ersten Heizung (122) geschalteten Schalter (116b) zum Öffnen oder Schließen des zweiten Strompfades (120) im Ansprechen auf einen jeweils aktuellen Betriebszustand des Elektromotors (112);
**dadurch gekennzeichnet, dass**
der Schalter (116b) als Bimetallschalter ausgebildet ist; und
eine dem Bimetallschalter (116b) zugeordnete zweite Heizung (116a), welche sich in einem anderen Strompfad (110, 130) als die erste Heizung (122) befindet, vorgesehen ist zum Detektieren des jeweils aktuellen Betriebszustandes des Elektromotors (112) und zum Ansteuern des Bimetallschalters (116b) durch Verändern von dessen Umgebungstemperatur im Ansprechen auf den detektierten Betriebszustand.

2. Schaltkreis (100) nach Anspruch 1, **gekennzeichnet durch** einen von dem Elektromotor (112) angetriebenen Lüfter (200) zum Erzeugen eines Luftstromes, welcher vorzugsweise von der ersten Heizung (122) erwärmt wird.

3. Schaltkreis (100) nach einem der vorangegangenen Ansprüche, **dadurch gekennzeichnet, dass** die zweite Heizung (116a) in dem ersten Strompfad (110) in Reihe zu dem Elektromotor (112) geschaltet ist.

4. Schaltkreis (100) nach Anspruch 2, **dadurch gekennzeichnet, dass** die zweite Heizung (116a) in einem dritten Strompfad (130) eingebaut und in dem Luftstrom des Lüfters (200) so angeordnet ist, dass die von ihr erzeugte Wärme zumindest teilweise von dem Luftstrom abtransportiert wird und deshalb nicht bzw. nur eingeschränkt auf den Bimetallschalter (116a) einwirkt.

5. Schaltkreis (100) nach Anspruch 4, **dadurch gekennzeichnet, dass** der dritte Strompfad (130) dauernd bestromt ist.

6. Schaltkreis (100) nach einem der vorangegangenen Ansprüche, **dadurch gekennzeichnet, dass** die zweite Heizung (116a) und der Bimetallschalter (116b) in einem Bauteil integriert sind.

7. Schaltkreis (100) nach einem der vorangegangenen Ansprüche, **dadurch gekennzeichnet, dass** zumindest zwei der drei Strompfade (110, 120, 130) zueinander parallel zwischen ein gemeinsames Spannungspotential (+) und Masse geschaltet sind.

8. Schaltkreis (100) nach einem der vorangegangenen Ansprüche, **dadurch gekennzeichnet, dass** er Schaltkreis (100) in einem Wäschetrockner (300) ist, welcher Wäschetrockner (300) eine Wäschetrommel (310), welche einen Raum zum Trocknen von Wäsche ausbildet, und einen Lüfter (200) zum Erzeugen eines Luftstromes durch die Trommel (310) aufweist, wobei der Elektromotor (112) zum Antreiben des Lüfters (200) und die erste Heizung (122) zum Aufheizen des Luftstromes durch die Trommel (310) dient.

9. Verfahren zum Betreiben eines Wäschetrockners (300) mit einem Lüfter (200) zum Erzeugen eines Luftstromes zum Trocknen von Wäsche, einem den Lüfter (200) antreibenden Elektromotor (112) und einer ersten Heizung (122), umfassend die folgenden Schritte:
Erwärmen eines Luftstromes mit Hilfe der ersten Heizung (122);
Detektieren des jeweils aktuellen Betriebszustandes des Elektromotors (112); und
Ein- oder Ausschalten der ersten Heizung (122) im Ansprechen auf den detektierten Betriebszustand;
**dadurch gekennzeichnet, dass**
das Detektieren des jeweils aktuellen Betriebszustandes mit Hilfe einer zweiten Heizung (116a), welche sich in einem anderen Strompfad (110, 130) als die erste Heizung (122) befindet, erfolgt; und
das Ein- oder Ausschalten mit Hilfe eines Bimetallschalters (116a) erfolgt, indem die Umgebungstemperatur des Bimetallschalters (116a) mit Hilfe der zweiten Heizung (116b) im Ansprechen auf den detektierten aktuellen Betriebszustand eingestellt wird.

## Claims

1. Electrical circuit (100) comprising:
a plurality of current paths (110, 120, 130) with a first current path (110) with an electric motor (112) and a second current path (120) with a first heating means (122) and a switch (116b), which is connected in series with the first heating means (12), for opening or closing the second current path (120) in response to a respective instantaneous operating state of the electric motor (112), **characterised in that** the switch (116b) is constructed as a bimetallic switch and a second heating means (116a), which is associated with the bimetallic switch (116b) and disposed in a current path (110, 130) different from the first heating means (122), is provided for detecting the respective instantaneous operating state of the electric motor (112) and for controlling the bimetallic switch (116b) by changing the ambient temperature thereof in response to the detected operating state.

2. Circuit (100) according to claim 1, **characterised by** a fan (200) which is driven by the electric motor (112), for generating an air flow, which is preferably heated by the first heating means (122).

3. Circuit (100) according to one of the preceding claims, **characterised in that** the second heating means (116a) in the first current path (110) is connected in series with the electric motor (112).

4. Circuit (100) according to claim 2, **characterised in that** the second heating means (116a) is incorporated in a third current path (130) and so arranged in the air flow of the fan (200) that the heat generated by it is transported away at least in part by the air flow and accordingly does not act or acts to only a limited extent on the bimetallic switch (116a).

5. Circuit (100) according to claim 4, **characterised in that** the third current path (130) is permanently current conductive.

6. Circuit (100) according to any one of the preceding claims, **characterised in that** the second heating means (116a) and the bimetallic switch (116b) are integrated in one component.

7. Circuit (100) according to any one of the preceding claims, **characterised in that** at least two of the three current paths (110, 120, 130) are connected in parallel between a common voltage potential (+) and ground.

8. Circuit (100) according to any one of the preceding claims, **characterised in that** it is a circuit (100) in a laundry dryer (300), which laundry dryer (300) comprises a laundry drum (310), which forms a space for drying laundry, and a fan (200) for generating an air flow through the drum (310), wherein the electric motor (112) serves for driving the fan (200) and the first heating means (122) serves for heating the air flow through the drum (310).

9. Method of operating a laundry dryer (300) with a fan (200) for generating an air flow for drying laundry, an electric motor (112) driving the fan (200) and a first heating means (122), comprising the following steps:
heating an air flow with the help of the first heating means (122);
detecting the respective instantaneous operating state of the electric motor (112); and
switching the first heating means (122) on or off in response to the detected operating state;
**characterised in that**
the detection of the respective instantaneous operating state is carried out with the help of a second heating means (116a) disposed in a current path (110, 130) different from the first heating means (122); and
the switching-on or switching-off is carried out with the help of a bimetallic switch (116a) **in that** the ambient temperature of the bimetallic switch (116a) is set with the help of the second heating means (116b) in response to the detected instantaneous operating state.

## Revendications

1. Circuit électrique (100) comprenant : une pluralité de branches de circuit (110, 120, 130) avec une première branche de circuit (110) avec un moteur électrique (112) et une deuxième branche de circuit (120) avec un premier chauffage (122) et un commutateur (116b) connecté en série par rapport au premier chauffage (122) pour l'ouverture ou la fermeture de la deuxième branche de circuit (120) en réponse à un état de fonctionnement respectif actuel du moteur électrique (112) ; **caractérisé en ce que** le commutateur (116b) est exécuté sous forme de commutateur bimétallique ; et un deuxième chauffage (116a) affecté au commutateur bimétallique (116b), lequel chauffage se trouve dans une autre branche de circuit (110, 130) que le premier chauffage (122), est prévu pour détecter l'état de fonctionnement respectif actuel du moteur électrique (112) et pour commander le commutateur bimétallique (116b) par modification de sa température ambiante en réponse à l'état de fonctionnement détecté.

2. Circuit électrique (100) selon la revendication 1, **caractérisé par** un ventilateur (200) actionné par le moteur électrique (112) pour la production d'un écoulement d'air, lequel est de préférence réchauffé par le premier chauffage (122).

3. Circuit électrique (100) selon l'une quelconque des revendications précédentes, **caractérisé en ce que** le deuxième chauffage (116a) dans la première branche de circuit (110) est connectée en série avec le moteur électrique (112).

4. Circuit électrique (100) selon la revendication 2, **caractérisé en ce que** le deuxième chauffage (116a) est monté dans une troisième branche de circuit (130) et est disposé dans l'écoulement d'air du ventilateur (200) de sorte que la chaleur qu'il produit est au moins en partie évacuée par l'écoulement d'air et agit par conséquent pas resp. seulement de manière limitée sur le commutateur bimétallique (116b).

5. Circuit électrique (100) selon la revendication 4, **caractérisé en ce que** la troisième branche de circuit (130) est en permanence sous tension électrique.

6. Circuit électrique (100) selon l'une quelconque des revendications précédentes, **caractérisé en ce que** le deuxième chauffage (116a) et le commutateur bimétallique (116b) sont intégrés dans un élément constitutif.

7. Circuit électrique (100) selon l'une quelconque des revendications précédentes, **caractérisé en ce qu'**au moins deux des trois branches de circuit (110, 120, 130) sont connectées parallèlement l'une à l'autre entre un potentiel de tension (+) commun et la masse.

8. Circuit électrique (100) selon l'une quelconque des revendications précédentes, **caractérisé en ce que** le circuit électrique (100) se trouve dans un séchoir à linge (300), lequel séchoir à linge (300) présente un tambour à linge (310), lequel constitue un espace de séchage du linge, et un ventilateur (200) pour la production d'un écoulement d'air au travers du tambour (310), dans lequel le moteur électrique (112) sert à l'actionnement du ventilateur (200) et le premier chauffage (122) au réchauffement de l'écoulement d'air au travers du tambour (310).

9. Procédé d'exploitation d'un séchoir à linge (300) avec un ventilateur (200) pour la production d'un écoulement d'air pour le séchage du linge, un moteur électrique (112) qui actionne le ventilateur (200) et un premier chauffage (122), comprenant les étapes suivantes:réchauffer un écoulement d'air à l'aide du premier chauffage (122), détecter l'état de fonctionnement respectif actuel du moteur électrique (112) ; et mise en ou hors service du premier chauffage (122) en réponse à l'état de fonctionnement détecté; **caractérisé en ce que** le fait de détecter l'état de fonctionnement respectif actuel a lieu à l'aide d'un deuxième chauffage (116a), lequel se trouve dans une autre branche de circuit (110, 130) que le premier chauffage (122), et la mise en ou hors circuit a lieu à l'aide d'un commutateur bimétallique (116b), dans lequel la température ambiante du commutateur bimétallique (116b) est réglée à l'aide du deuxième chauffage (116a) en réponse à l'état de fonctionnement actuel détecté.
